# EUROPÄISCHE PATENTANMELDUNG

(11) **EP 4 375 017 A1**
(43) Veröffentlichungstag der Anmeldung: **29.05.2024**
(21) Anmeldenummer: 23211941.2
(22) Anmeldetag: 24.11.2023
(51) Int. Cl.: B25B 27/00, G01B 5/255, G01B 11/275

(54) **VORRICHTUNG UND VERFAHREN ZUM AUSRICHTEN EINES LENKERS**

(30) Priorität: 25.11.2022 DE 102022131298
(71) Anmelder: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB

(57) **Zusammenfassung**

Eine Vorrichtung (100) zum Ausrichten eines Lenkers eines muskelkraftbetriebenen Fahrzeugs zu einem Bauteil des muskelkraftbetriebenen Fahrzeugs, mit einer Anordnungseinrichtung (12) zum Anordnen der Vorrichtung (100) an zwei zueinander beabstandeten Anordnungsstellen an dem Lenker, und einem Bauteilzeiger (22), welcher einen Positionierungsort zum Positionieren des Bauteilzeigers (22) an dem Bauteil (20) bereitstellt, wobei der Positionierungsort in einem an dem Lenker angeordneten Zustand der Vorrichtung (100) zu den beiden Anordnungsstellen im Wesentlichen gleich beabstandet ist. Ein Verfahren zum Ausrichten eines Lenkers eines muskelkraftbetriebenen Fahrzeugs zu einem Bauteil des muskelkraftbetriebenen Fahrzeugs mittels der Vorrichtung (100).

## Beschreibung

### Technisches Gebiet

Die vorliegende Erfindung bezieht sich auf eine Vorrichtung und ein Verfahren zum Ausrichten eines Lenkers eines muskelkraftbetriebenen Fahrzeugs zu einem Bauteil des muskelkraftbetriebenen Fahrzeugs. Die vorliegende Erfindung bezieht sich auch auf ein muskelkraftbetriebenes Fahrzeug.

### Stand der Technik

Bei aus dem Stand der Technik bekannten muskelkraftbetriebenen Fahrzeugen kann es erforderlich sein, einen Lenker des muskelkraftbetriebenen Fahrzeugs relativ zu einem Bauteil des muskelkraftbetriebenen Fahrzeugs, beispielsweise dessen Vorderrad, auszurichten. Hierbei kann es notwendig sein, die Ausrichtung des Lenkers zu dem Bauteil visuell zu überprüfen und basierend auf einer derartigen visuellen Überprüfung manuell einzustellen.

### Darstellung der Erfindung

Die vorliegende Erfindung betrifft in einem Aspekt eine Vorrichtung zum Ausrichten eines Lenkers eines muskelkraftbetriebenen Fahrzeugs zu einem Bauteil des muskelkraftbetriebenen Fahrzeugs. Bei dem Ausrichten des Lenkers kann es sich um ein Einstellen oder Justieren der relativen Orientierung des Lenkers in Bezug auf das Bauteil handeln. Bei dem Ausrichten des Lenkers kann es sich um ein symmetrisches Ausrichten des Lenkers zu dem Bauteil handeln. Bei dem Ausrichten des Lenkers kann es sich ferner um ein orthogonales Ausrichten des Lenkers zu dem Bauteil handeln.

Das muskelkraftbetriebene Fahrzeug kann ein Zweirad oder ein Dreirad sein. Das muskelkraftbetriebene Fahrzeug kann auch einen Energiespeicher zum Bereitstellen von Energie zum Antreiben des muskelkraftbetriebenen Fahrzeugs aufweisen. Bei dem muskelkraftbetriebenen Fahrzeug kann es sich daher neben einem ausschließlich oder überwiegend durch Muskelkraft antreibbaren Fahrzeug auch um ein Fahrzeug handeln, welches neben Muskelkraft auch durch Energie betrieben werden kann, welche von einem Energiespeicher bereitgestellt werden kann. Bei dem muskelkraftbetriebenen Fahrzeug kann es sich daher beispielsweise auch um ein E-Bike handeln. Das muskelkraftbetriebene Fahrzeug kann beispielsweise ein zweirädriges Fahrrad oder ein dreirädriges Fahrrad. Der Lenker kann daher ein Zweiradlenker, ein Dreiradlenker oder ein Fahrradlenker sein. Das Bauteil des muskelkraftbetriebenen Fahrzeugs kann ein mit dem Lenker auslenkbares Bauteil oder ein rahmenseitiges Bauteil sein. Der Lenker kann zu mindestens einem dieser Bauteile ausgerichtet werden. Der Lenker kann somit auch zu verschiedenen Bauteilen, beispielsweise dem auslenkbaren Bauteil und dem rahmenseitigen Bauteil, ausgerichtet werden.

Die Vorrichtung weist eine Anordnungseinrichtung zum Anordnen der Vorrichtung an zwei zueinander beabstandeten Anordnungsstellen an dem Lenker auf. Die Anordnungseinrichtung kann zum beweglichen Anordnen der Vorrichtung an den beiden Anordnungsstellen ausgebildet sein. Die beiden Anordnungsstellen können symmetrisch zu einer Lenkermitte des Lenkers an dem Lenker angeordnete Anordnungsstellen sein. Gemäß einer Ausführungsform handelt es sich bei den beiden Anordnungsstellen um die beiden Lenkerenden des Lenkers.

Die Vorrichtung weist zudem einen Bauteilzeiger auf, welcher einen Positionierungsort zum Positionieren des Bauteilzeigers an dem Bauteil bereitstellt. Bei dem Positionieren kann es sich um ein zentrisches Positionieren des Bauteilzeigers an dem Bauteil handeln. Der Bauteilzeiger kann zu der Anordnungseinrichtung beabstandet sein. Der Positionierungsort kann zu der Anordnungseinrichtung beabstandet sein. Der Positionierungsort ist in einem an dem Lenker angeordneten Zustand der Vorrichtung zu den beiden Anordnungsstellen im Wesentlichen gleich beabstandet. Als "im Wesentlichen gleich beanstandet" ist es anzusehen, wenn die Abstände zwischen dem Positionierungsort und den beiden Anordnungsstellen aufgrund von Fertigungstoleranzen der Vorrichtung oder aufgrund von Materialeigenschaften der Vorrichtung, insbesondere in dem an dem Lenker angeordneten Zustand der Vorrichtung, fertigungsbedingt oder verwendungsbedingt abweichen.

Gemäß einer Ausführungsform kann der Positionierungsort in dem an dem Lenker angeordneten Zustand der Vorrichtung zu den beiden Anordnungsstellen gleich beabstandet sein. Auch als "gleich beanstandet" ist es anzusehen, wenn die Abstände zwischen dem Positionierungsort und den beiden Anordnungsstellen aufgrund von Fertigungstoleranzen der Vorrichtung oder aufgrund von Materialeigenschaften der Vorrichtung, insbesondere in dem an dem Lenker angeordneten Zustand der Vorrichtung, fertigungsbedingt oder verwendungsbedingt abweichen. Fertigungstoleranzen können sich auf die Fertigung der Anordnungseinrichtung, des Bauteilzeigers und einer Verbindung des Bauteilzeigers mit der Anordnungseinrichtung beziehen.

Die beiden Anordnungsstellen und der Positionierungsort können in dem an dem Lenker angeordneten Zustand der Vorrichtung ein gleichschenkliges Dreieck aufspannen. Sind die beiden Anordnungsstellen symmetrisch zu der Lenkermitte des Lenkers angeordnet, kann durch das Positionieren des Bauteilzeigers an dem Bauteil der Lenker symmetrisch zu dem Bauteil ausgerichtet werden.

Gemäß einer Ausführungsform der Vorrichtung kann die Anordnungseinrichtung zum schwenkbaren Anordnen der Vorrichtung an den beiden Anordnungsstellen ausgebildet sein. Die Anordnungseinrichtung kann in dem an dem Lenker angeordneten Zustand der Vorrichtung um eine Schwenkachse schwenkbar sein, welche durch die beiden Anordnungsstellen oder parallel zu den beiden Anordnungsstellen verläuft. Der Bauteilzeiger kann in dem angeordneten Zustand der Vorrichtung auf das Bauteil schwenkbar sein. Alternativ oder zusätzlich kann der Bauteilzeiger in dem angeordneten Zustand der Vorrichtung auf ein weiteres Bauteil des muskelkraftbetriebenen Fahrzeugs schwenkbar sein. Der Bauteilzeiger kann daher auf das auslenkbare Bauteil, beispielsweise ein Vorderrad des muskelkraftbetriebenen Fahrzeugs, und auf das rahmenseitige Bauteil, beispielsweise ein Oberrohr des Rahmens des muskelkraftbetriebenen Fahrzeugs oder einen Sattel des muskelkraftbetriebenen Fahrzeugs, schwenkbar sein. Der Positionierungsort kann daher mit der Vorrichtung effizient und positionsgenau an mindestens einem Bauteil des muskelkraftbetriebenen Fahrzeugs oder an mehreren Bauteilen des muskelkraftbetriebenen Fahrzeugs bereitgestellt werden, um den Lenker an dem mindestens einen Bauteil oder an den mehreren Bauteilen auszurichten.

Gemäß einer weiteren Ausführungsform der Vorrichtung kann die Vorrichtung zum Ausrichten des Lenkers zu zwei verschiedenen Bauteilen des muskelkraftbetriebenen Fahrzeugs eingerichtet sein. Bei den beiden verschiedenen Bauteilen kann es sich um das auslenkbare Bauteil und das rahmenseitige Bauteil, beispielsweise um das Vorderrad und das Oberrohr oder den Sattel, handeln. Der Bauteilzeiger kann mindestens einen Positionierungsort zum Positionieren des Bauteilzeigers an den beiden Bauteilen bereitstellen. Der Bauteilzeiger kann zwei Positionierungsorte zum Positionieren des Bauteilzeigers an den beiden Bauteilen bereitstellen. Der mindestens eine Positionierungsort oder die beiden Positionierungsorte können in dem an dem Lenker angeordneten Zustand der Vorrichtung zu den beiden Anordnungsstellen im Wesentlichen gleich beabstandet sein. Bei der Vorrichtung kann es sich daher um eine multifunktionale Vorrichtung zum Ausrichten des Lenkers zu zwei verschiedenen Bauteilen des muskelkraftbetriebenen Fahrzeugs handeln, welche voneinander beabstandet an dem muskelkraftbetriebenen Fahrzeug montiert sein können.

Gemäß einer weiteren Ausführungsform der Vorrichtung kann die Anordnungseinrichtung zum Anordnen der Vorrichtung an den beiden Lenkerendbereichen des Lenkers ausgebildet sein. Bei der Anordnungseinrichtung kann es sich um eine spangenartige Einrichtung zum jeweiligen Anordnen der Vorrichtung an den beiden Lenkerendbereichen handeln. Bei der Anordnungseinrichtung kann so zum symmetrischen Anordnen der Vorrichtung in Bezug auf eine Lenkermitte des Lenkers ausgebildet sein. Die Anordnungseinrichtung kann zum Anordnen der Vorrichtung an verschiedenen Lenkern mit verschiedenen Lenkergeometrien ausgebildet sein. Die Anordnungseinrichtung kann ferner auch zum Anordnen der Vorrichtung an den beiden Griffen des Lenkers ausgebildet sein, welche an den Lenkerenden angeordnet sein können.

Gemäß einer weiteren Ausführungsform der Vorrichtung kann die Anordnungseinrichtung zwei Anordnungselemente aufweisen, welche jeweils eine trichterförmige Aufnahme zum symmetrischen Aufnehmen der beiden Lenkerendbereiche aufweisen. Die Lenkerendbereich können jeweils einen Griff aufweisen. Die trichterförmigen Aufnahmen können eine jeweilige konische Ausnehmung aufweisen, in welcher ein jeweiliges Lenkerendbereich zentrisch aufgenommen werden kann. Die trichterförmigen Aufnahmen können Die Lenkerendbereiche können somit in den trichterförmigen Aufnahmen um die Anordnungsstellen schwenkbar aufgenommen werden.

Gemäß einer weiteren Ausführungsform der Vorrichtung kann diese zwei Schenkel aufweisen, welche an einem jeweiligen Schenkelende über ein Drehgelenk verbunden sind. Der Bauteilzeiger kann den Positionierungsort auf einer Drehachse des Drehgelenks bereitstellen. Die Anordnungseinrichtung kann an den beiden Schenkeln angeordnet sein. Die beiden Anordnungselemente können jeweils an einem der beiden Schenkel angeordnet sein. Die Anordnungselemente können an den zu den das Drehgelenk verbindenden Schenkelenden gegenüberliegenden Schenkelenden angeordnet sein. Bei dem Drehgelenk kann es sich um ein Scharnier handeln. Die Anordnungseinrichtung kann daher zum variablen Anordnen der Vorrichtung an zwei zueinander beabstandeten Anordnungsstellen an dem Lenker ausgebildet sein, wobei der Abstand zwischen den beiden Anordnungsstellen einstellbar sein kann. Ein Öffnungswinkel der Schenkel an dem Drehgelenk kann einstellbar sein, um die beiden Anordnungsstellen einzustellen. Zudem können die drehbar verbundenen Schenkel in einem nicht an dem Lenker angeordneten Zustand der Vorrichtung kompakte Dimensionen der Vorrichtung bereithalten.

Gemäß einer weiteren Ausführungsform der Vorrichtung sind die beiden Schenkel mit einem Spannmechanismus verbunden. Der Spannmechanismus kann in dem an dem Lenker angeordneten Zustand der Vorrichtung bewirken, dass die Vorrichtung über die Anordnungseinrichtung an dem Lenker verspannt ist. Die Anordnungseinrichtung kann so an dem Lenker positionsgenau und um die Schwenkachse schwenkbar angeordnet sein. Während dem Positionieren des Bauteilzeigers an dem Bauteil ist es daher nicht erforderlich, die Anordnungseinrichtung an dem Lenker manuell zu halten.

Gemäß einer weiteren Ausführungsform der Vorrichtung weist der Bauteilzeiger einen Dorn auf, dessen Dornspitze den Positionierungsort bereitstellt. Mit dem Dorn kann der Bauteilzeiger zentrisch an einer Bauteilmitte des Bauteils positioniert werden. Alternativ oder zusätzlich zu dem Dorn kann der Bauteilzeiger auch eine Kerbe aufweisen, deren Mittelachse den Positionierungsort bereitstellen kann. Auch mit der Kerbe kann der Bauteilzeiger zentrisch an einer Bauteilmitte des Bauteils positioniert werden.

Die vorliegende Erfindung betrifft in einem weiteren Aspekt ein Verfahren zum Ausrichten eines Lenkers eines muskelkraftbetriebenen Fahrzeugs zu einem Bauteil des muskelkraftbetriebenen Fahrzeugs mittels der Vorrichtung gemäß dem vorhergehenden Aspekt. Auch das Verfahren kann multifunktional zum Ausrichten des Lenkers zu verschiedenen Bauteilen des muskelkraftbetriebenen Fahrzeugs durchgeführt werden.

Das Verfahren weist als einen Schritt ein Anordnen der Anordnungseinrichtung der Vorrichtung an zwei zueinander beabstandeten Anordnungsstellen an dem Lenker auf. Das Anordnen der Vorrichtung kann, wie zu dem vorhergehenden Aspekt beschrieben, durchgeführt werden. Das Verfahren weist als einen weiteren Schritt ein Positionieren des Bauteilzeigers der Vorrichtung an dem Bauteil auf. Auch das Positionieren kann, wie zu dem vorhergehenden Aspekt beschrieben, durchgeführt werden. Durch das Positionieren des Bauteilzeigers kann der Lenker ausgerichtet werden. Das Verfahren weist als einen weiteren Schritt ein Einstellen eines Verbindungsmechanismus auf, welcher den Lenker mit dem Bauteil verbindet. Alternativ oder zusätzlich zu dem Positionieren kann durch das Einstellen des Verbindungsmechanismus der Lenker ausgerichtet werden. Durch das Einstellen des Verbindungsmechanismus kann auch das Positionieren des Bauteilzeigers ausgeführt werden, womit der Lenker ausgerichtet wird.

Gemäß einer Ausführungsform des Verfahrens kann im Schritt des Positionierens der Bauteilzeiger an einem mit dem Lenker auslenkbaren Bauteil, insbesondere einem Vorderrad, des muskelkraftbetriebenen Fahrzeugs positioniert werden. Im Schritt des Einstellens kann ein auslenkungsseitiger Verbindungsmechanismus eingestellt werden, welcher eingerichtet ist, den Lenker mit einem Gabelschaft des muskelkraftbetriebenen Fahrzeugs drehfest zu verbinden. Der auslenkungsseitige Verbindungsmechanismus kann eingerichtet sein, den Lenker zu dem Gabelschaft auszurichten.

Gemäß einer weiteren Ausführungsform des Verfahrens kann im Schritt des Positionierens der Bauteilzeiger an einem rahmenseitigen Bauteil, insbesondere einem Oberrohr oder einem Sattel, des muskelkraftbetriebenen Fahrzeugs positioniert werden. Im Schritt des Einstellens kann ein rahmenseitiger Verbindungsmechanismus eingestellt wird, welcher einen Gabelschaft des muskelkraftbetriebenen Fahrzeugs mit dem rahmenseitigen Bauteil verbindet und eingerichtet ist, eine relative Auslenkung des Gabelschafts zu dem rahmenseitigen Bauteil einzustellen. Bei dem rahmenseitigen Verbindungsmechanismus kann es sich um einen Mechanismus zum Rückstellen des Gabelschafts bei einem Auslenken des Lenkers in eine Neutralstellung des Lenkers handeln. Bei der Neutralstellung kann es sich um eine Lenkerstellung handeln, welche eine Geradeausfahrt des muskelkraftbetriebenen Fahrzeugs bereithält.

Gemäß einer weiteren Ausführungsform des Verfahrens kann der Schritt des Einstellens des auslenkungsseitigen Verbindungsmechanismus nach dem Schritt des Positionierens des Bauteilzeigers an dem auslenkbaren Bauteil zum Ausrichten des Lenkers zu dem auslenkbaren Bauteil durchgeführt werden. Darauffolgend können als weitere Schritte der Schritt des Einstellens des rahmenseitigen Verbindungsmechanismus und der Schritt des Positionierens des Bauteilzeigers an dem rahmenseitigen Bauteil zum Ausrichten des Lenkers zu dem rahmenseitigen Bauteil durchgeführt werden.

Die vorliegende Erfindung betrifft in einem weiteren Aspekt ein muskelkraftbetriebenes Fahrzeug, welches einen Lenker aufweist, der mit der Vorrichtung gemäß dem entsprechenden vorhergehenden Aspekt oder durch das Verfahren gemäß dem vorhergehenden Aspekt zu mindestens einem Bauteil des muskelkraftbetriebenen Fahrzeugs ausgerichtet ist.

Ausführungsformen eines Aspekts der vorliegenden Erfindung können entsprechende Ausführungsformen eines der weiteren Aspekte der vorliegenden Erfindung bilden.

### Kurze Beschreibung der Figuren

- Figur 1: zeigt eine Vorrichtung zum Ausrichten eines Lenkers gemäß einer Ausführungsform der Erfindung.
- Figur 2: zeigt die Vorrichtung in einem an einem Lenker angeordneten Zustand.
- Figur 3: zeigt eine Anordnung der Vorrichtung an dem Lenker zum Ausrichten des Lenkers zu einem mit dem Lenker auslenkbaren Bauteil.
- Figur 4: zeigt eine weitere Anordnung der Vorrichtung zum Ausrichten des Lenkers zu einem rahmenseitigen Bauteil.

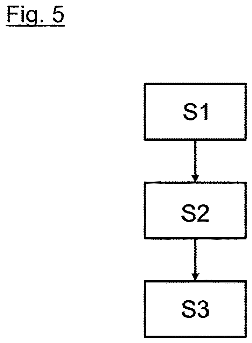

- Figur 5: zeigt ein Ablaufdiagramm mit Schritten eines Verfahrens zum Ausrichten eines Lenkers.

### Detaillierte Beschreibung von Ausführungsformen

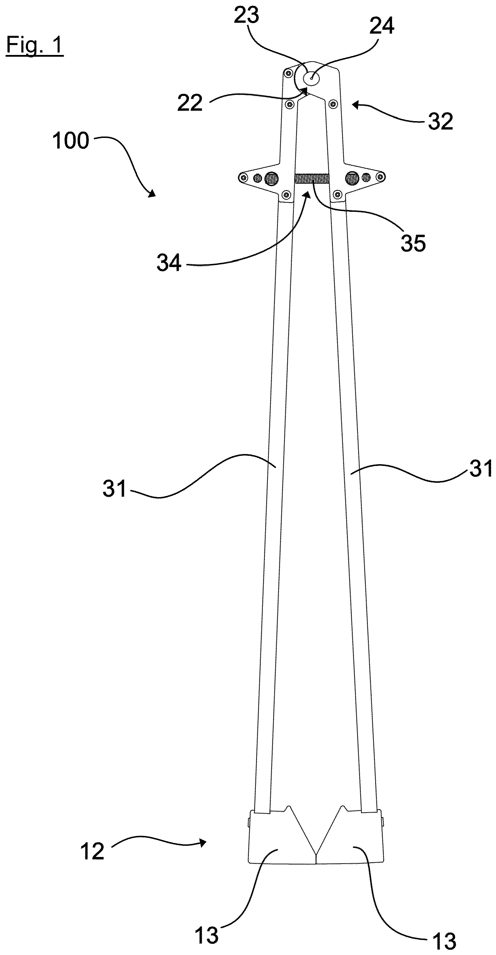

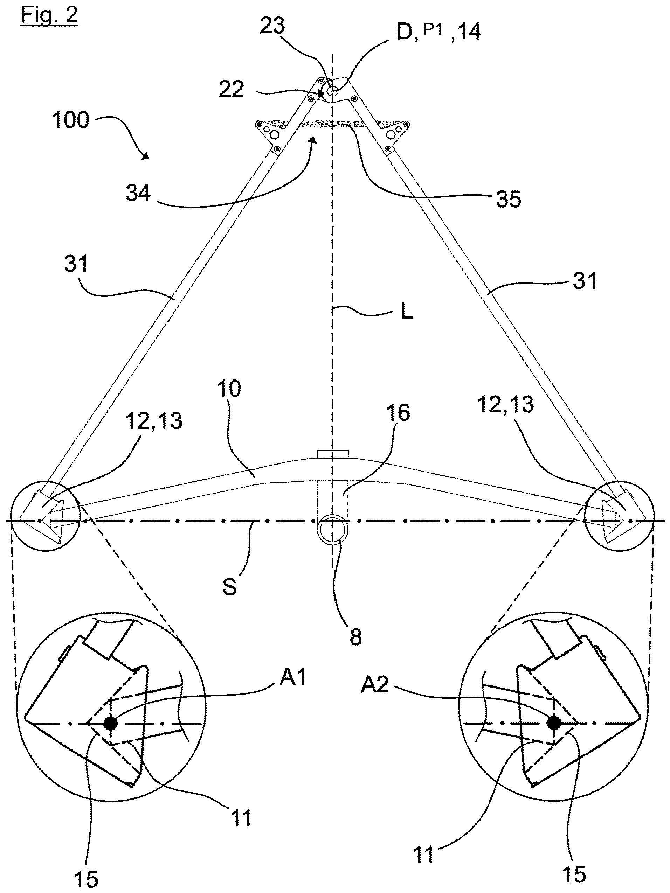

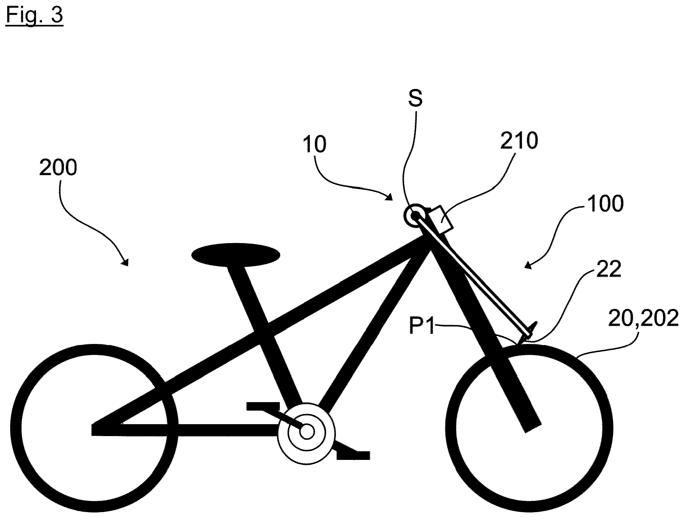

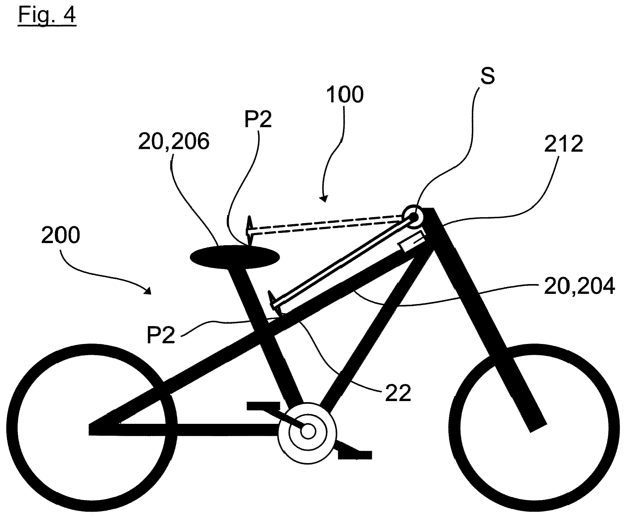

Figur 1 zeigt eine Vorrichtung 100 zum Ausrichten eines in Figur 2 gezeigten Lenkers 10 eines in den Figuren 3 und 4 gezeigten muskelkraftbetriebenen Fahrzeugs 200 zu einem Bauteil des muskelkraftbetriebenen Fahrzeugs 200. Die Vorrichtung 100 weist eine Anordnungseinrichtung 12 auf, mit welcher die Vorrichtung 100 an dem Lenker 10 anordbar ist. Die Anordnungseinrichtung 12 weist zwei Anordnungselemente 13 auf, mit welchen die Vorrichtung 100 an den Lenkerendbereichen des Lenkers 10 anordbar ist. Die Anordnungseinrichtung 12 ist so über die beiden Anordnungselemente 13 an Lenkerendbereichen des Lenkers 10 anordbar. Die Vorrichtung 100 weist zudem einen Bauteilzeiger 22 auf, welcher in der in Figur 1 gezeigten Ausführungsform als Dorn 23 ausgebildet ist. Der Dorn 23 weist eine Dornspitze 24 auf, welche einen Positionierungsort zum Positionieren des Bauteilzeigers 22 an dem Bauteil des muskelkraftbetriebenen Fahrzeugs 200 bereitstellt. Der Bauteilzeiger 22 ist mit der Anordnungseinrichtung 12 verbunden. Die Vorrichtung 100 weist zudem zwei Schenkel 31 auf, welche den Bauteilzeiger 22 mit den beiden Anordnungselementen 13 verbinden.

Die Vorrichtung 100 weist ein Drehgelenk 32 auf, welches die beiden Schenkel 31 schwenkbar verbindet. Der Bauteilzeiger 22 ist an dem Drehgelenk 32 angeordnet. Das Drehgelenk 32 verbindet somit den Bauteilzeiger mit der Anordnungseinrichtung 12, wobei die Anordnungselemente 13 von dem Bauteilzeiger 22 gleich beabstandet angeordnet sind. Die Vorrichtung 100 weist auch einen Spannmechanismus 34 auf, welcher die Schenkel 31 in den in Figur 1 gezeigten zusammengeklappten Zustand spannt. Der Spannmechanismus 34 weist eine Spannfeder 35 auf, welche benachbart zu dem Drehgelenk 32 die beiden Schenkel 31 verbindet. Die Federenden der Spannfeder 35 sind an den Schenkeln 31 befestigt, wobei die Federenden zu den Schenkelachsen außenliegend befestigt sind.

Figur 2 zeigt die zu Figur 1 beschriebene Vorrichtung 100 in einem an dem Lenker 10 angeordneten Zustand. Die Anordnungselemente 13 sind an Lenkerendbereichen 11 des Lenkers 10 angeordnet. Die Anordnungselemente 13 weisen trichterförmige Aufnahmen 15 auf, in welchen die Lenkerenden 11 symmetrisch zu der Lenkermitte des Lenkers 10 aufnehmbar sind. Die Vorrichtung 100 wird so an zwei zueinander beabstandeten Anordnungsstellen A1, A2 an dem Lenker 10 angeordnet. Durch die Anordnungsstellen A1, A2 verläuft eine Schwenkachse S, um welche die Vorrichtung 100 an dem Lenker 10 verschwenkbar angeordnet ist. Der Bauteilzeiger 22 kann so auf das Bauteil des muskelkraftbetriebenen Fahrzeugs 200 geschwenkt werden, um den Bauteilzeiger 22 zentrisch auf dem Bauteil zu positionieren. Eine derartige Positionierung und Ausrichtung des Lenkers 10 zu dem Bauteil wird dadurch ermöglicht, dass der Lenker 10 drehbar zu einem Gabelschaft 8 des muskelkraftbetriebenen Fahrzeugs 200 angeordnet ist. In der in Figur 2 gezeigten Ausführungsform weist der Lenker 10 zudem einen Lenkervorbau 16 auf, welcher auf dem Gabelschaft 8 drehbar montiert ist. Wie in Figur 2 gezeigt, ist der Bauteilzeiger 22 auf einer Drehachse D des Drehgelenks 32 in einer Fahrzeuglängsebene L positioniert. Da auch das Bauteil in einer Geradeausfahrt des muskelkraftbetriebenen Fahrzeugs in der Fahrzeuglängsebene L liegt, kann somit durch Ausrichten des Lenkers 10 die Spur des muskelkraftbetriebenen Fahrzeugs 200 eingestellt werden.

Figur 3 zeigt ein muskelkraftbetriebenes Fahrzeug 200, bei dem es sich in der in Figur 3 gezeigten Ausführungsform um ein Fahrrad handelt. Die Vorrichtung 100 ist derart an dem Lenker 10 des muskelkraftbetriebenen Fahrzeugs 200 angeordnet, dass die Vorrichtung 100 um die Schwenkachse S schwenkbar ist. Die Vorrichtung 100 kann derart um die Schwenkachse S verschwenkt werden und der Lenker 10 kann derart ausgerichtet werden, dass der Bauteilzeiger 22 zentrisch auf dem Bauteil 20 an einem Positionierungsort P1 positioniert ist, wodurch der Lenker 10 symmetrisch zu dem Bauteil 20 ausgerichtet wird. Bei dem Bauteil 20 handelt es sich bei der in Figur 3 gezeigten Ausführungsform um ein Vorderrad 202 des Fahrrads.

Die Ausrichtbarkeit des Lenkers 10 wird durch einen auslenkungsseitigen Verbindungsmechanismus 210 bereitgestellt, welcher das Positionieren des Bauteilzeigers 22 und das Ausrichten des Lenkers 10 zu dem Bauteil 20 ermöglicht. Bei dem Bauteil 20 kann es sich um ein auslenkungsseitiges Bauteil 20 des muskelkraftbetriebenen Fahrzeugs 200 handeln. Bei dem auslenkungsseitigen Verbindungsmechanismus 210 kann es sich in der in Figur 3 gezeigten Ausführungsform um einen lösbaren Klemmmechanismus des Lenkers 10 handeln, mit welchem die Ausrichtung des Lenkers 10 an dem Gabelschaft 8 einstellbar und feststellbar ist. Der lösbare Klemmmechanismus kann von dem Lenkervorbau 16 bereitgehalten werden, welcher den Lenker 10 einstellbar und feststellbar mit dem Gabelschaft 8 verbindet, an welchem das Vorderrad 202 angeordnet ist.

Figur 4 zeigt erneut das bereits in Figur 3 gezeigte muskelkraftbetriebene Fahrzeug 200. Die Vorrichtung 100 ist in der in Figur 4 gezeigten Ausführungsform derart um die Schwenkachse S verschwenkt und der Lenker 10 derart ausgerichtet, dass der Bauteilzeiger 22 zentrisch auf einem weiteren Bauteil 20 des muskelkraftbetriebenen Fahrzeugs 200 an einem weiteren Positionierungsort P2 positioniert ist. Bei dem weiteren Bauteil 20 kann es sich um ein rahmenseitiges Bauteil 20 des muskelkraftbetriebenen Fahrzeugs 200 handeln. Das Bauteil 20 kann ein Oberrohr 204 oder ein Sattel 206 sein, deren jeweiliges Bauteilzentrum in der Fahrzeuglängsebene L liegen. Der Lenker 10 kann derart ausgerichtet werden, dass der Bauteilzeiger 22 zentrisch auf dem weiteren Bauteil 20 positioniert ist, wodurch der Lenker 10 symmetrisch zu dem weiteren Bauteil 20 ausgerichtet wird.

Die Ausrichtbarkeit des Lenkers 10 wird durch einen rahmenseitigen Verbindungsmechanismus 212 bereitgestellt, welcher das Positionieren des Bauteilzeigers 22 und das Ausrichten des Lenkers 10 zu dem weiteren Bauteil 20 ermöglicht. Der rahmenseitige Verbindungsmechanismus 212 kann bei der in Figur 4 gezeigten Ausführungsform einen Einstellmechanismus des Lenkers 10 aufweisen, mit welchem die Ausrichtung des Lenkers 10 zu dem weiteren Bauteil 20 einstellbar ist. Bei der Ausrichtung des Lenkers 10 kann es sich um eine Neutralstellung handeln, in welcher der Lenker 10 nicht manuell ausgelenkt wird. Der rahmenseitige Verbindungsmechanismus 212 kann ein Rückstellen eines ausgelenkten Lenkers 10 in die Neutralstellung bereitstellen.

Figur 3 zeigt ein Ablaufdiagramm mit Schritt S1 bis S3 zum Durchführen eines Verfahrens zum Ausrichten des Lenkers 10 relativ mindestens einem der beschriebenen Bauteile 20. In einem ersten Schritt S1 wird die Vorrichtung 100 wie zu Figur 2 beschrieben an dem Lenker 10 schwenkbar angeordnet. In einem zweiten Schritt S2 wird der Bauteilzeiger 22 der Vorrichtung 100 an einem der Bauteile 20 positioniert, um den Lenker 10 zu dem Bauteil 20 symmetrisch auszurichten. In einem dritten Schritt S3 wird der Verbindungsmechanismus, welcher den Lenker 10 mit dem Bauteil 20 verbindet, eingestellt, um die symmetrische Ausrichtung des Lenkers 10 bereitzustellen. Die Schritte S2 und S3 können sich wiederholend für das zu Figur 3 beschriebene Bauteil 20 und für das zu Figur 4 beschriebene weitere Bauteil 20 ausgeführt werden.

Im Schritt S2 kann der Bauteilzeiger 22 an dem Vorderrad 202 zunächst positioniert werden, bevor im Schritt S3 der auslenkungsseitige Verbindungsmechanismus 210 eingestellt wird, um den Lenker 10 mit einem Gabelschaft 8 drehfest zu verbinden. Weiter kann im darauffolgend in einem wiederholten Schritt S2 der Bauteilzeiger 22 an dem Oberrohr 204 oder an dem Sattel 206 positioniert werden, bevor im Schritt S3 der ausrahmenseitige Verbindungsmechanismus 212 eingestellt wird, um den Lenker 10 symmetrisch zu dem Oberrohr 204 oder dem Sattel 206 auszurichten. Durch die wiederholte Ausführung der Schritte S2 und S3 kann der Lenker 10 somit sowohl zum Vorderrad 202 als auch zu dem Oberrohr 204 oder dem Sattel 206 symmetrisch ausgerichtet werden, wodurch das Verfahren zum Einstellen der Spur des muskelkraftbetriebene Fahrzeug 200 angewendet werden kann.

### Bezugszeichen

- 8: Gabelschaft
- 10: Lenker
- 11: Lenkerendbereiche
- 12: Anordnungseinrichtung
- 13: Anordnungselemente
- 15: trichterförmige Aufnahme
- 16: Lenkervorbau
- 20: Bauteil
- 22: Bauteilzeiger
- 23: Dorn
- 24: Dornspitze
- 31: Schenkel
- 32: Drehgelenk
- 34: Spannmechanismus
- 35: Spannfeder
- 100: Vorrichtung
- 200: muskelkraftbetriebenes Fahrzeug
- 202: Vorderrad
- 204: Oberrohr
- 206: Sattel
- 210: auslenkungsseitiger Verbindungsmechanismus
- 212: rahmenseitiger Verbindungsmechanismus
- A1, A2: Anordnungsstelle
- D: Drehachse
- L: Fahrzeuglängsebene
- P1, P2: Positionierungsort
- S: Schwenkachse
- S1: Anordnen
- S2: Positionieren
- S3: Einstellen

## Patentansprüche

1. Vorrichtung (100) zum Ausrichten eines Lenkers (10) eines muskelkraftbetriebenen Fahrzeugs (200) zu einem Bauteil (20) des muskelkraftbetriebenen Fahrzeugs (200), mit
einer Anordnungseinrichtung (12) zum Anordnen der Vorrichtung (100) an zwei zueinander beabstandeten Anordnungsstellen (A1, A2) an dem Lenker (10), und einem Bauteilzeiger (22), welcher einen Positionierungsort (P1) zum Positionieren des Bauteilzeigers (22) an dem Bauteil (20) bereitstellt,
wobei der Positionierungsort (P1) in einem an dem Lenker (10) angeordneten Zustand der Vorrichtung (100) zu den beiden Anordnungsstellen (A1, A2) im Wesentlichen gleich beabstandet ist.

2. Vorrichtung (100) nach Anspruch 1,
wobei die Anordnungseinrichtung (12) zum schwenkbaren Anordnen der Vorrichtung (100) an den beiden Anordnungsstellen (A1, A2) ausgebildet ist,
wobei die Anordnungseinrichtung (12) in dem an dem Lenker (10) angeordneten Zustand der Vorrichtung (100) um eine Schwenkachse (S) schwenkbar ist, welche durch die beiden Anordnungsstellen (A1, A2) oder parallel zu den beiden Anordnungsstellen (A1, A2) verläuft.

3. Vorrichtung (100) nach Anspruch 1 oder 2,
welche zum Ausrichten des Lenkers (10) zu zwei verschiedenen Bauteilen (20) des muskelkraftbetriebenen Fahrzeugs (200) eingerichtet ist,
wobei der Bauteilzeiger (22) mindestens einen Positionierungsort (P1, P2) zum Positionieren des Bauteilzeigers (22) an den beiden Bauteilen (20) bereitstellt, und wobei der mindestens eine Positionierungsort (P1, P2) in dem an dem Lenker (10) angeordneten Zustand der Vorrichtung (100) zu den beiden Anordnungsstellen (A1, A2) im Wesentlichen gleich beabstandet ist.

4. Vorrichtung (100) nach einem der vorhergehenden Ansprüchen,
wobei die Anordnungseinrichtung (12) zum Anordnen der Vorrichtung (100) an den beiden Lenkerendbereichen (11) des Lenkers (10) ausgebildet ist.

5. Vorrichtung (100) nach Anspruch 4,
wobei die Anordnungseinrichtung (12) zwei Anordnungselemente (13) aufweist, welche jeweils eine trichterförmige Aufnahme (15) zum zentrischen Aufnehmen der beiden Lenkerendbereiche (11) aufweisen.

6. Vorrichtung (100) nach einem der vorhergehenden Ansprüche, mit zwei Schenkeln (31), welche über ein Drehgelenk (32) verbunden sind,
wobei der Bauteilzeiger (22) den Positionierungsort (P1) auf einer Drehachse (D) des Drehgelenks (32) bereitstellt, und
wobei die Anordnungseinrichtung (12) an den beiden Schenkeln (31) angeordnet ist.

7. Vorrichtung (100) nach Anspruch 6,
wobei die beiden Schenkel (31) mit einem Spannmechanismus (34) verbunden sind, welcher in dem an dem Lenker (10) angeordneten Zustand der Vorrichtung (100) bewirkt, dass die Vorrichtung (100) über die Anordnungseinrichtung (12) an dem Lenker (10) verspannt ist.

8. Vorrichtung (100) nach einem der vorhergehenden Ansprüche,
wobei der Bauteilzeiger (22) einen Dorn (23) aufweist, dessen Dornspitze (24) den Positionierungsort (P1) bereitstellt.

9. Verfahren zum Ausrichten eines Lenkers (10) eines muskelkraftbetriebenen Fahrzeugs (200) zu einem Bauteil (20) des muskelkraftbetriebenen Fahrzeugs (200) mittels der Vorrichtung (100) nach einem der vorhergehenden Ansprüche und mit den Schritten:
Anordnen (S1) der Anordnungseinrichtung (12) der Vorrichtung (100) an zwei zueinander beabstandeten Anordnungsstellen (A1, A2) an dem Lenker (10), Positionieren (S2) des Bauteilzeigers (22) der Vorrichtung (100) an dem Bauteil (20), und
Einstellen (S3) eines Verbindungsmechanismus, welcher den Lenker (10) mit dem Bauteil (20) verbindet.

10. Verfahren nach Anspruch 9,
wobei im Schritt des Positionierens (S2) der Bauteilzeiger (22) an einem auslenkbaren Bauteil (20), insbesondere einem Vorderrad (202), des muskelkraftbetriebenen Fahrzeugs (200) positioniert wird, und
wobei im Schritt des Einstellens (S3) ein auslenkungsseitiger Verbindungsmechanismus (210) eingestellt wird, welcher eingerichtet ist, den Lenker (10) mit einem Gabelschaft (8) des muskelkraftbetriebenen Fahrzeugs (200) drehfest zu verbinden.

11. Verfahren nach Anspruch 9 oder 10,
wobei im Schritt des Positionierens (S2) der Bauteilzeiger (22) an einem rahmenseitigen Bauteil (20), insbesondere einem Oberrohr (204) oder einem Sattel (206), des muskelkraftbetriebenen Fahrzeugs (200) positioniert wird, und
wobei im Schritt des Einstellens (S3) ein rahmenseitiger Verbindungsmechanismus (212) eingestellt wird, welcher einen Gabelschaft (8) des muskelkraftbetriebenen Fahrzeugs (200) mit dem rahmenseitigen Bauteil (20) verbindet und eingerichtet ist, eine relative Auslenkung des Gabelschafts (8) zu dem rahmenseitigen Bauteil (20) einzustellen.

12. Verfahren nach den Ansprüchen 9 bis 11,
wobei der Schritt des Einstellens (S3) nach Anspruch 10 nach dem Schritt des Positionierens (S2) nach Anspruch 10 zum Ausrichten des Lenkers (10) zu dem auslenkbaren Bauteil (20) durchgeführt wird, und darauffolgend als weitere Schritte der Schritt des Einstellens (S3) nach Anspruch 11 nach dem Schritt des Positionierens (S2) nach Anspruch 11 zum Ausrichten des Lenkers (10) zu dem rahmenseitigen Bauteil (20) durchgeführt wird.

13. Muskelkraftbetriebenes Fahrzeug (200),
welches einen Lenker (10) aufweist, der mit der Vorrichtung (100) nach einem der Ansprüche 1 bis 8 oder durch ein Verfahren nach einem der Ansprüche 9 bis 12 zu mindestens einem Bauteil (20) des muskelkraftbetriebenen Fahrzeugs (200) ausgerichtet ist.
